# EUROPÄISCHE PATENTANMELDUNG

(11) **EP 1 595 626 A2**
(43) Veröffentlichungstag der Anmeldung: **16.11.2005**
(21) Anmeldenummer: 05010142.7
(22) Anmeldetag: 10.05.2005
(51) Int. Cl.: B23B 39/00, B23Q 1/00, B23Q 5/14

(54) **Säulenbohrmaschine**

(30) Priorität: 12.05.2004 DE 202004007618 U
(71) Anmelder: Rotwerk Elektrowerkzeuge und Handelsmarketing Beteiligungsgesellschaft mbH, 85609 Aschheim (DE)
(72) Erfinder: Die Erfindernennung liegt noch nicht vor
(74) Vertreter: Grünecker, Kinkeldey, Stockmair & Schwanhäusser Anwaltssozietät

(57) **Zusammenfassung**

Die vorliegende Erfindung betrifft eine Säulenbohrmaschine (1) mit einem an einer Säule (3) gelagerten Bohrkopf (2), welchem ein Energieversorgungsstrang zugeleitet ist und welcher einen Antrieb (7) sowie ein Gehäuse (4) aufweist, wobei der Antrieb (7) wenigstens bereichsweise in einem Antriebsraum (5) des Gehäuses aufgenommen ist. Um auf möglichst einfache Weise einen Energieversorgungsstrang (36) in besser geschützter Weise gefährdungs- und behinderungsarm zu führen, weist das Gehäuse (4) einen zu dem Antriebsraum (5) separaten Versorgungsraum (6) auf, in welchem der Energieversorgungsstrang (36) der Säulenbohrmaschine (1) verläuft.

## Beschreibung

Die vorliegende Erfindung betrifft eine Säulenbohrmaschine mit den Merkmalen des Oberbegriffes des Anspruches 1.

Aus der Praxis sind gattungsgemäße Säulenbohrmaschinen bekannt, bei welchen einem an einem Bohrkopf angebrachten Ein-/Ausschalter oder direkt einem Motor ein Energieversorgungsstrang frei hängend zugeführt ist. Dieser Energieversorgungsstrang ist gefährdet, mit drehenden Teilen der Säulenbohrmaschine in Konflikt zu geraten und stellt außerdem eine Unfallquelle und Behinderung dar.

Für ein festeres Verlegen des Energieversorgungsstranges ist vorgeschlagen worden, den Energieversorgungsstrang mit Kabelbindem oder Klemmvorrichtungen an der Säulenbohrmaschine oder ihrer Säule zu befestigen. Jedoch können sich diese Befestigungen lösen, wodurch der Energieversorgungsstrang wiederum frei hängt. Außerdem ist der Energieversorgungsstrang weiterhin Beschädigungen ausgesetzt.

Der vorliegenden Erfindung liegt die Aufgabe zugrunde, eine gattungsgemäße Säulenbohrmaschine zu schaffen, bei welcher auf möglichst einfache Weise ein Energieversorgungsstrang in besser geschützter Weise gefährdungs- und behinderungsarm geführt ist.

Die Aufgabe wird erfindungsgemäß gelöst mit einer Säulenbohrmaschine mit den Merkmalen des Anspruches 1.

Weil der Energieversorgungsstrang im Versorgungsraum verläuft, ist er in diesem Bereich gut davor geschützt, mit sich bewegenden Teilen der Säulenbohrmaschine in Berührung zu kommen. Das betrifft sowohl mechanische Einflüsse von außen, wie z. B. von sich drehenden Werkzeugen, sowie vom Antriebsraum ausgehende mechanische Einflüsse, beispielsweise vom Antrieb oder sich lösenden Teilen des Antriebes. Außerdem ist der Energieversorgungsstrang bei mechanischen Arbeiten im Antriebsraum gut vor Beschädigungen geschützt. In dem Bereich, in dem der Energieversorungsstrang im Versorgungsraum verlegt ist, geht vom Energieversorgungsstrang keine Unfallgefahr oder Behinderung aus. Gegebenenfalls kann der Energieversorgungsstrang sogar lose verlegt werden.

Vorteilhafterweise kann der Energieversorgungsstrang vom Inneren der Säule in den Versorgungsraum geführt sein und in diesem zu einer Bedieneinheit der Säulenbohrmaschine verlaufen. Auf diese Weise verläuft der Energieversorgungsstrang geschützt vom Inneren der Säule bis zur Bedieneinheit innerhalb des Gehäuses.

Bevorzugterweise kann der Energieversorgungsstrang von einer Bedieneinheit der Säulenbohrmaschine durch den Versorgungsraum zu einem Gehäuseaustritt verlaufen, durch welchen der Energieversorgungsstrang aus dem Gehäuse austritt. Dadurch verläuft der Energieversorgungsstrang von der Bedieneinheit bis zum Gehäuseaustritt geschützt innerhalb des Gehäuses.

Günstigerweise kann der Energieversorgungsstrang von einem Gehäuseaustritt aus dem Versorgungsraum zu einer Motoreinheit verlaufen und zwischen dem Gehäuseaustritt und der Motoreinheit eine variable Abstandsausgleichsschlaufe aufweisen. Hierdurch kann der Energieversorgungsstrang auch dann seine Lage im Versorgungsraum beibehalten, wenn die Position der Motoreinheit relativ zum Gehäuse veränderbar ist, wobei diese Positionsänderung durch die Abstandsausgleichsschlaufe ausgeglichen wird. Außerdem bietet die Abstandsausgleichsschlaufe Spielraum, um die Motoreinheit trotz montiertem Energieversorgungsstrang vom Gehäuse abnehmen zu können, wobei der Energieversorgungsstrang auch hierbei seine Lage im Versorgungsraum beibehält.

Besonders vorteilhaft kann in einem Innenraum des Gehäuses ein lösbares, den Antriebsraum und den Versorgungsraum voneinander abteilendes Trennelement vorgesehen sein. Auf diese Weise kann das Gehäuse von einem Zustand mit durchgehendem Innenraum in einen Zustand mit Arbeitsraum und Versorgungsraum überführt werden und umgekehrt. Gegebenenfalls sind Gehäuse mit durchgehendem Innenraum durch Nachrüsten mit dem Trennelement nachträglich in Antriebsraum und Versorgungsraum unterteilbar.

Besonders bevorzugt kann das Trennelement plattenartig ausgebildet sein. Dadurch ist der Versorgungsraum gut vor von dem Antrieb freigesetzten Stoffen geschützt, wie z.B. vor Stäuben oder Ölen. Außerdem schützt das Trennelement den Versorgungsraum vor thermischen Einflüssen aus dem Antriebsraum und umgekehrt. Bei einem Brand des Energieversorgungsstranges schützt das Trennelement den Antriebsraum auch vor den unmittelbaren Einflüssen des Brandes, wie z. B. Flammen oder Hitzekonzentrationen.

Besonders günstig kann das Trennelement eine Bohrspindel wenigstens abschnittsweise umgreifend ausgebildet sein. Hiermit besteht auch im Bereich der Bohrspindel die Trennung zwischen Arbeitsraum und Versorgungsraum.

Vorteilhafterweise kann das Trennelement einen inneren Boden des Gehäuses fluchtend fortsetzend ausgebildet sein. Auf diese Weise hat der Antriebsraum einen durchgehenden, im Wesentlichen ebenen Boden.

Eine Ausführungsform der Erfindung ist in der Zeichnung dargestellt und wird nachfolgend erläutert. Es zeigen:
- Figur 1: eine abschnittsweise perspektivische Ansicht auf die rechte Seite einer erfindungsgemäßen Säulenbohrmaschine, wobei ein Bohrkopf der Säulenbohrmaschine seitlich freigeschnitten ist,
- Figur 2: eine abschnittsweise perspektivische Ansicht auf die linke Seite der Säulenbohrmaschine, wobei der Bohrkopf seitlich freigeschnitten ist,
- Figur 3: eine abschnittsweise perspektivische Ansicht auf die linke Seit der Säulenbohrmaschine, wobei ein Gehäuseoberteil des Bohrkopfes aufgeklappt ist und
- Figur 4: eine abschnittsweise perspektivische Ansicht des Bohrkopfes mit aufgeklapptem Gehäuseoberteil.

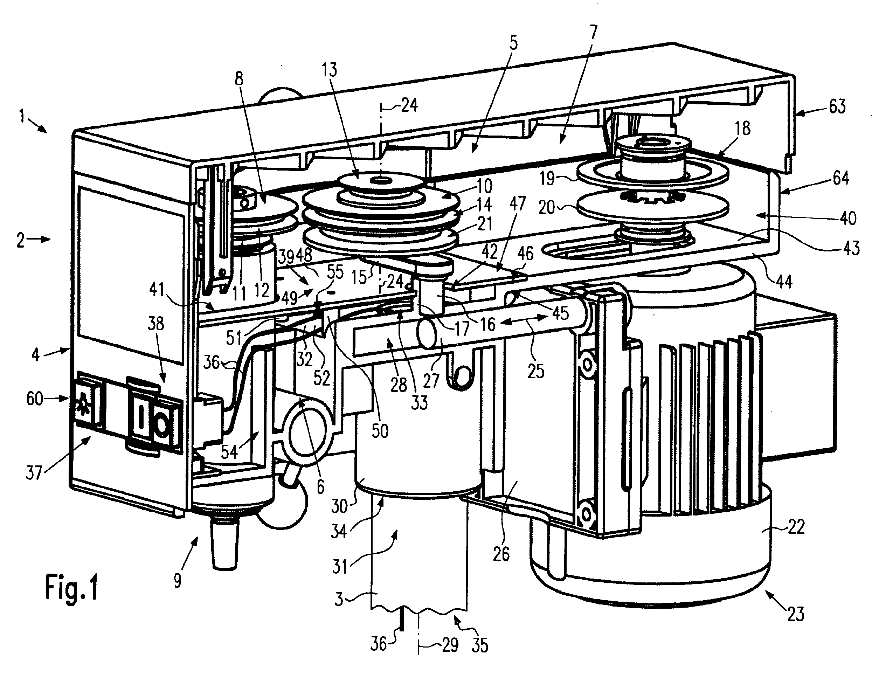

Figur 1 ist eine abschnittsweise perspektivische Ansicht auf die rechte Seite einer erfindungsgemäßen Säulenbohrmaschine 1. Die Säulenbohrmaschine 1 weist einen Bohrkopf 2 auf, der an einer Säule 3 gelagert ist. Ferner weist der Bohrkopf 2 ein Gehäuse 4 mit einem Antriebsraum 5 und einem dazu separaten Versorgungsraum 6 auf.

In dem Antriebsraum 5 ist ein Antrieb der Säulenbohrmaschine 1 angeordnet, der in dieser Ausführungsform der Erfindung ein mechanischer Antrieb ist, und zwar ein Riementrieb 7, der ein Endlostrieb ist.

Der Riementrieb 7 weist eine erste Mehrfachriemenscheibe 8 auf, welche eine Bohrspindel 9 antreibt. Die erste Mehrfachriemenscheibe 8 wird durch einen nicht gezeigten Riemen von einer zweiten Mehrfachriemenscheibe 10 des Riementriebs 7 angetrieben. Die Übersetzung zwischen der ersten und zweiten Mehrfachriemenscheibe 8, 10 hängt davon ab, über welche Paarung von Riemenscheiben 11, 13; 12, 14 der Mehrfachriemenscheiben 8, 10 der Riemen gelegt ist.

Die zweite Mehrfachriemenscheibe 10 ist über einen Arm 15 schwenkbar an dem Gehäuse 4 gelagert. An dem Arm 15 ist ein Lagerzapfen 16 vorgesehen, welcher drehbar in einer buchsenartigen Tragaufnahme 17 des Gehäuses 4 gelagert ist. Durch die Schwenkbarkeit der zweiten Mehrfachriemenscheibe 10 sind unterschiedliche Abstände der ersten und zweiten Riemenscheiben 8, 10 ausgleichbar, die sich je nach Paarung der Riemenscheiben 11, 13; 12, 14 der ersten und zweiten Mehrfachriemenscheibe 8, 10 und gleicher Riemenlänge ergeben.

Die zweite Mehrfachriemenscheibe 10 weist eine dritte Riemenscheibe 21 auf, über welche sie mittels eines nicht gezeigten Riemens von einer variablen Riemenscheibe 18 angetrieben wird. Die variable Riemenscheibe 18 weist eine erste und eine zweite Riemenscheibenhälfte 19, 20 auf, deren Abstand zueinander verstellbar ist. Je nach Abstand der ersten und zweiten Riemenscheibenhälften 19, 20 besteht zwischen der zweiten Mehrfachriemenscheibe 10 und der variablen Riemenscheibe 18 eine andere Übersetzung.

Die variable Riemenscheibe 18 wird von einem Motor 22 einer Motoreinheit 23 angetrieben. Die Motoreinheit 23 ist quer zu einer Drehachse 24 der zweiten Mehrfachriemenscheibe 10 translatorisch in Pfeilrichtung 25 relativ zum Gehäuse 4 verstellbar. Auf diese Weise sind unterschiedliche Abstände der variablen Riemenscheibe 18 zu der zweiten Mehrfachriemenscheibe 10 einstellbar zu denen unterschiedliche Abstände zwischen den Riemenscheibenhälften 19, 20 und somit unterschiedliche Übersetzungen zwischen der zweiten Mehrfachriemenscheibe 10 und der variablen Riemenscheibe 18 bei gleicher Riemenlänge korrespondieren.

Die Motoreinheit 23 ist an einer Motorträgerplatte 26 befestigt. Die Motorträgerplatte 26 ist an männlichen Führungselementen 27 angebracht, die in dieser Ausführungsform der Erfindung zylinderartig ausgebildet sind. Die männlichen Führungselemente 27 sind in weiblichen Führungselementen 28 bewegbar, welche in dieser Ausführungsform der Erfindung zylinderförmige Bohrungen sind. Die weiblichen Führungselemente 28 verlaufen etwa quer zu einer Längsachse 29 einer Manschette 30 des Gehäuses 4.

In der Manschette 30 ist ein oberes Ende 31 der Säule 3 aufgenommen. Dabei ist eine innere Kontur der Manschette 30 korrespondierend zu einer äußeren Kontur der Säule 3 ausgebildet. In dieser Ausführungsform der Erfindung sind sowohl die Manschette 30 als auch die Säule 3 jeweils im Wesentlichen hohlzylindrisch ausgebildet.

Die Säule 3 ist in der Manschette 30 bis an eine quer zu der Manschette 30 verlaufende und an die Manschette 30 angrenzende mittlere, untere Gehäusewand 32 des Gehäuses 4 anstoßend herangeführt. Die mittlere, untere Gehäusewand 32 weist im Bereich der Manschette 30 eine Öffnung 33 auf. In dieser Ausführungsform der Erfindung ist die Öffnung 33 kreisförmig ausgebildet und konzentrisch zu dem hohlzylindrischen Manschetteninnenraum 34 der Manschette 30 angeordnet.

Der Antriebsraum 5 und der Versorgungsraum 6 sind durch ein Trennelement 39 voneinander abgeteilt. Das heißt, ein Innenraum 40 des Gehäuses 4 ist durch das Trennelement 39 in den Antriebsraum 5 und den Versorgungsraum 6 unterteilt. Das Trennelement 39 ist lösbar an dem Gehäuse 4 angebracht und plattenartig ausgebildet.

In dieser Ausführungsform der Erfindung ist das Trennelement aus einem elektrisch nicht leitendem Material ausgebildet, vorzugsweise aus einem ABS-Kunststoff.

In einer alternativen Ausführungsform der Erfindung kann das Trennelement gitterartig ausgebildet sein.

Das Trennelement 39 weist einen ersten U-förmigen Ausschnitt 41 auf, mit welchem es die Spindel 9 abschnittsweise umgreift, sowie einen zweiten U-förmigen Ausschnitt 42, mit welchem es die Tragaufnahme 17 umgreift.

Das Trennelement 39 ist einen inneren Boden 43 des Gehäuses 4 fluchtend fortsetzend ausgebildet. Der innere Boden 43 ist die Innenseite einer motorseitigen, unteren Gehäusewand 44 des Gehäuses 4. Unterhalb der motorseitigen, unteren Gehäusewand 44 ist die Motoreinheit 23 translatorisch verschiebbar angeordnet.

In Richtung zu der Manschette 30 schließt sich an die motorseitige, untere Gehäusewand 44 ein Stufenabschnitt 45 des Gehäuses 4 an, an welchen sich wiederum die mittlere, untere Gehäusewand 32 anschließt. Der Stufenabschnitt 45 weist eine Stufe 46 auf, auf welcher ein Endabschnitt 47 des Trennelementes 39 aufliegt. Dabei schließt eine Antriebsraumseite 48 des Trennelementes 39 mit dem inneren Boden 43 ab. Das heißt, der innere Boden 43 und die Antriebsraumseite 48 liegen in einer Ebene.

In einem mittleren Bereich 49 des Trennelementes 39 wird das Trennelement 39 von zwei Abstandselementen 50, 51 gegenüber der mittleren, unteren Gehäusewand 32 abgestützt und ist über die Abstandselemente 50, 51 an der mittleren, unteren Gehäusewand 32 befestigt. Die Abstandselemente 50, 51 sind in dieser Ausführungsform der Erfindung zylinderförmige Dome, die parallel zueinander und parallel zu der Längsachse 29 der Manschette 30 verlaufend angeordnet sind. Das Trennelement 39 verläuft parallel zu der mittleren, unteren Gehäusewand 32, wobei die Länge der Abstandselemente 50, 51 hierzu korrespondiert.

Durch das Innere 35 der Säule 3 ist dem Bohrkopf 2 ein Energieversorgungsstrang 36 zugeführt, der in dieser Ausführungsform der Erfindung ein Kabel ist. Vom Inneren 35 der Säule 3 kommend und durch die Öffnung 33 hindurchtretend verläuft der Energieversorgungsstrang 36 zwischen den beiden Abstandselementen 50, 51 hindurch zu einem bedieneinheitsseitigen Bereich 53 des Versorgungsraumes 6, wo er mit einem Ein-/Ausschalter 38 einer Bedieneinheit 37 verbunden ist. Dabei wird der Energieversorgungsstrang von einem seitlich der Spindel 9 angeordneten Steg 54 abgestützt, welcher etwa in Höhe der Innenseite 52 der mittleren, unteren Gehäusewand 32 abschließt.

Damit ist der Energieversorgungsstrang 36 vom Inneren 35 der Säule 3 unmittelbar in den Versorgungsraum 6 geführt und verläuft im Versorgungsraum 6 zur Bedieneinheit.

Von der Bedieneinheit 37 verläuft der Energieversorgungsstrang 36 durch den Versorgungsraum 6 zu einem Gehäuseaustritt 55, durch welchen der Energieversorgungsstrang 36 aus dem Gehäuse 4 ins Freie austritt. Der Gehäuseaustritt 55 ist ein Loch in der mittleren, unteren Gehäusewand 32, das in dieser Ausführungsform der Erfindung als eine Bohrung ausgebildet ist. Der Gehäuseaustritt 55 ist von der Öffnung 33 beabstandet.

Somit verläuft der Energieversorgungsstrang 36 von der Bedieneinheit 37 zurück zu der mittleren, unteren Gehäusewand 32. Dabei wird der Energieversorgungsstrang 36 von dem Steg 54 gestützt und verläuft zwischen den Abstandselementen 50, 51 hindurch über eine Innenseite 52 der mittleren, unteren Gehäusewand 32 hin zu dem Gehäuseaustritt 55.

Weil der Energieversorgungsstrang 36 innerhalb des Gehäuses 4 in dem Versorgungsraum 6 geführt ist, kann der Energieversorgungsstrang 36 selbst mit verringertem Aufwand im Gehäuse 4 verlegt werden. In dieser Ausführungsform der Erfindung ist der Energieversorgungsstrang 36 lose in dem Versorgungsraum 6 verlegt.

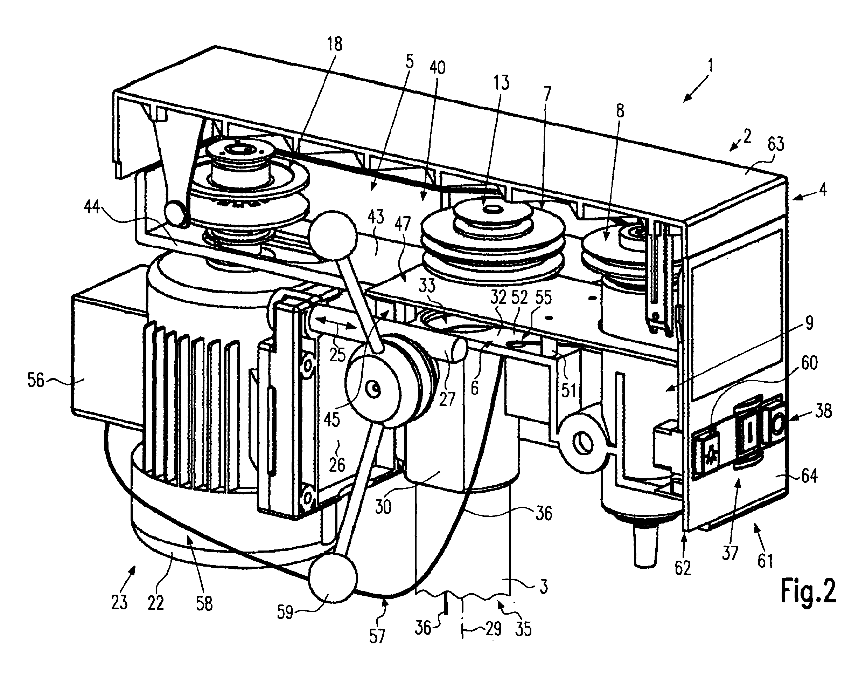

Figur 2 ist eine abschnittsweise perspektivische Ansicht der erfindungsgemäßen Säulenbohrmaschine 1, wobei eine linke Seite des Bohrkopfes 2 freigeschnitten ist. Wie in Figur 2 gezeigt ist, verläuft der Energieversorgungsstrang 36 von dem Versorgungsraum 6 kommend durch den Gehäuseaustritt 55 ins Freie hin zu der Motoreinheit 23, und zwar zu einem Schaltkasten 56 der Motoreinheit 23. Von dem Gehäuseaustritt 55 kommend verläuft der Energieversorgungsstrang 36 zunächst an der Manschette 30 und der Säule 3 vorbei und unter der Motorträgerplatte 26 hin zu einem Außenumfang 58 des Motors 22. An dem Außenumfang 58 des Motors 22 abschnittsweise anliegend verläuft der Energieversorgungsstrang 36 dann weiter zu dem Schaltkasten 56.

Zwischen dem Gehäuseaustritt 55 und der Motoreinheit 23 weist der Energieversorgungsstrang eine Abstandsausgleichsschlaufe 57 auf. Die Abstandsausgleichsschlaufe ist etwa bogenförmig ausgebildet und ist ein Längenänderungsvorrat des Energieversorgungsstranges 36. Mit Hilfe der Abstandsausgleichsschlaufe 57 passt sich der Energieversorgungsstrang 36 bei einem translatorischen Verstellen der Motoreinheit 23 an die neue Lage der Motoreinheit 23 relativ zu dem Gehäuse 4 automatisch an. Dabei bleibt die Lage des Energieversorgungsstranges 36 im Versorgungsraum 6 im Wesentlichen unverändert.

In dieser Ausführungsform der Erfindung ist der Energieversorgungsstrang 36 im Bereich des Gehäuseaustritts 55 fixiert. Zwischen dem Gehäuseaustritt 55 und der Motoreinheit 23 ist der Energieversorgungsstrang 36 freihängend vorgesehen. An dem Motor 22 ist der Stromversorgungsstrang 36 in dieser Ausführungsform der Erfindung befestigt.

In einer alternativen Ausführungsform der Erfindung kann der Energieversorgungsstrang 36 auch unbefestigt an dem Motor 22 entlang geführt sein.

Das translatorische Verstellen der Motoreinheit 23 relativ zu dem Gehäuse 4 erfolgt mit Hilfe einer Bedienhebelanordnung 59. Die Bedienhebelanordnung 59 ist drehbar und mit den männlichen Führungselementen 27 in Eingriff. Dabei wird eine Drehbewegung der Bedienhebelanordnung 59 in die translatorische Bewegung der männlichen Führungselemente 27 in Pfeilrichtung 25 umgewandelt.

Die Bedieneinheit 37 weist einen Lichtschalter 60 auf. Mit dem Lichtschalter 60 ist eine im Bereich der Spindel 9 an einer Unterseite 61 des Gehäuses 4 vorgesehene Lichtquelle 62 ein- und ausschaltbar. Die Lichtquelle 62 ist in dieser Ausführungsform der Erfindung eine Diodenlichtquelle.

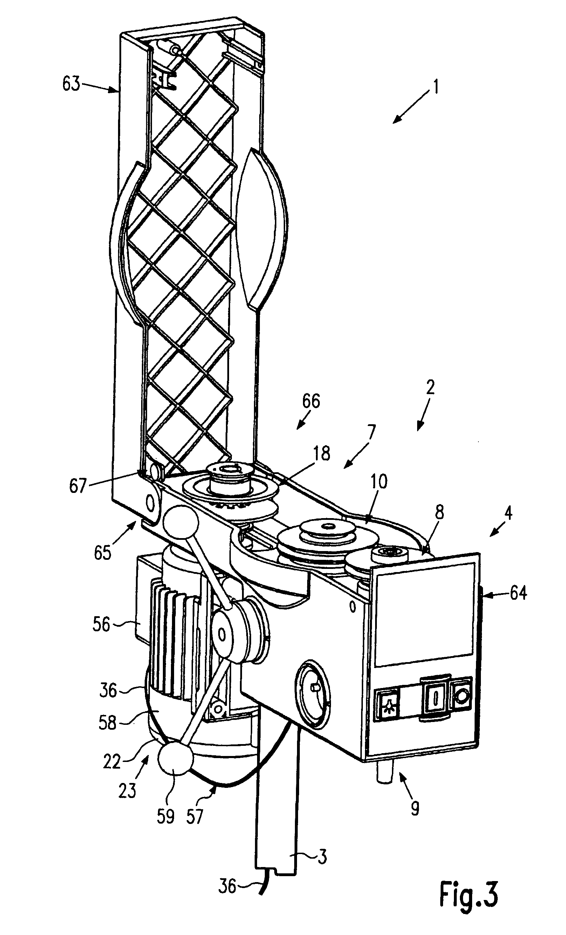

Das Gehäuse 4 weist ein Gehäuseoberteil 63 und ein Gehäuseunterteil 64 auf. Wie in Figur 3 gezeigt ist, ist das Gehäuseoberteil 63 mit Hilfe eines Gelenkes 65 schwenkbar an dem Gehäuseunterteil 64 gelagert. Das Gelenk 65 ist an einem motoreinheitsseitigen Ende 66 des Gehäuses 4 vorgesehen.

In Figur 3 ist das Gehäuse 4 in geöffnetem Zustand gezeigt, wobei sich das Gehäuseoberteil 63 in aufgeklapptem Zustand befindet.

Mit einem Sicherungselement 67 wird das Gehäuseoberteil 63 in seiner aufgeklappten Lage gesichert, insbesondere gegen ein unbeabsichtigtes Zuklappen. Das Sicherungselement 67 ist an dem Gehäuseteil 63 angeordnet und federelastisch auslenkbar.

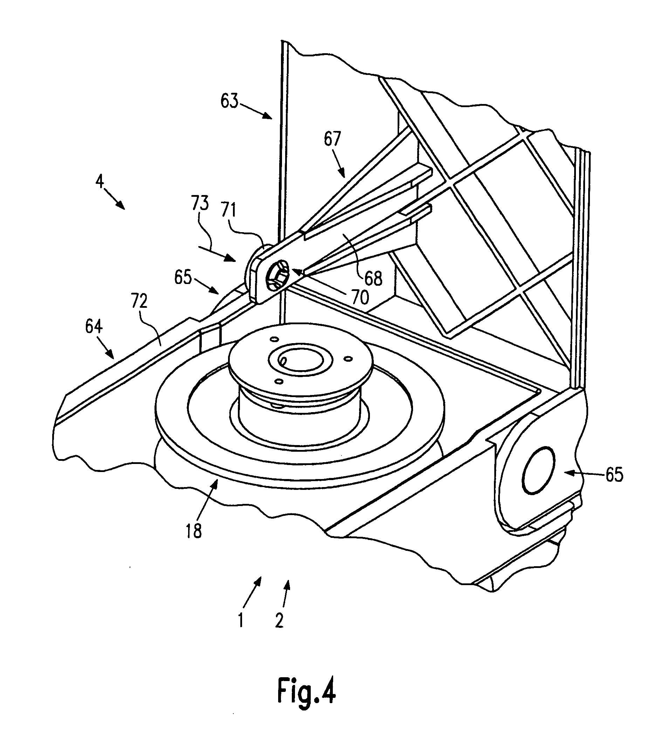

In Figur 4 ist das Gehäuse 4 ausschnittsweise vergrößert in geöffnetem Zustand gezeigt. Das Sicherungselement 67 weist einen federelastisch auslenkbaren Auslenkarm 68 auf, welcher an einer Oberwand 69 des Gehäuseoberteiles angebracht ist. In dieser Ausführungsform der Erfindung ist der Auslenkarm 68 einstückig mit der Oberwand 69 ausgebildet.

In Figur 4 ist der Auslenkarm 68 in seiner Ausgangsschwenkstellung gezeigt. Ferner liegt ein an einem Außenende 70 des Auslenkarmes 68 vorgesehenes Auflageelement 71 auf einer Abstützauflage des Gehäuseunterteiles 64 auf, die in dieser Ausführungsform der Erfindung ein Rand 72 des Gehäuseunterteiles 64 ist. Auf diese Weise wird das Gehäuseoberteil 63 über das Auflageelement 71 und den Auslenkarm 68 gegenüber dem Gehäuseunterteil 64 abgestützt.

Wird eine das Außenende 70 auslenkende Kraft auf den Auslenkarm 68 in Pfeilrichtung 73 ausgeübt, verformt sich der Auslenkarm 68 federelastisch und das Auflageelement 71 gelangt außer Eingriff mit dem Rand 72 des Gehäuseunterteiles 64. Damit ist das Sicherungselement 67 entsperrt und das Gehäuseoberteil 63 kann zu dem Gehäuseunterteil 64 heruntergeschwenkt werden. Dabei gleitet das Auflageelement 71 an dem Gehäuseunterteil 64 entlang, nämlich an einer Seitenwand 74 des Gehäuseunterteils 64, an welcher der Rand 72 ausgebildet ist. Hierbei wird das Auflageelement 71 durch die federelastische Verformung des Auslenkarms 68 gegen die Seitenwand 74 gedrückt.

Wird das Gehäuseoberteil 63 aufgeklappt, gleitet das Auflageelement 71 in umgekehrter Richtung an der Seitenwand 74 entlang, wobei das Auflageelement 71 gegen die Seitenwand 74 gedrückt wird. Erreicht das Gehäuseoberteil 63 die in den Figuren 3 und 4 gezeigte Aufklappendstellung, hat das Auflageelement 71 die Seitenwand 74 überstrichen und der Auslenkarm 68 kann in seine Ausgangsstellung entgegen der Pfeilrichtung 73 zurückschwenken. Dadurch gelangt das Auflageelement 71 in Eingriff mit dem Rand 72, wodurch das Sicherungselement 67 das Gehäuseoberteil 63 in seine Aufklappendstellung sichert und ein unbeabsichtigtes Zuklappen verhindert.

## Patentansprüche

1. Säulenbohrmaschine (1) mit einem an einer Säule (3) gelagerten Bohrkopf (2), welchem ein Energieversorgungsstrang (36) zugeleitet ist und welcher einen Antrieb (7) sowie ein Gehäuse (4) aufweist, wobei der Antrieb (7) wenigstens bereichsweise in einem Antriebsraum (5) des Gehäuses (4) aufgenommen ist,
**dadurch gekennzeichnet,**
**dass** das Gehäuse (4) einen zu dem Antriebsraum (5) separaten Versorgungsraum (6) aufweist, in welchem der Energieversorgungsstrang (36) der Säulenbohrmaschine (1) verläuft.

2. Säulenbohrmaschine nach Anspruch 1,
**dadurch gekennzeichnet,**
**dass** der Energieversorgungsstrang (36) vom Inneren (35) der Säule (3) in den Versorgungsraum (6) geführt ist und in diesem zu einer Bedieneinheit (37) der Säulenbohrmaschine (1) verläuft.

3. Säulenbohrmaschine nach Anspruch 1 oder 2,
**dadurch gekennzeichnet,**
**dass** der Energieversorgungsstrang (36) von einer Bedieneinheit (37) der Säulenbohrmaschine (1) durch den Versorgungsraum (6) zu einem Gehäuseaustritt (55) verläuft, durch welchen der Energieversorgungsstrang (36) aus dem Gehäuse (4) austritt.

4. Säulenbohrmaschine nach wenigstens einem der vorhergehenden Ansprüche,
**dadurch gekennzeichnet,**
**dass** der Energieversorgungsstrang (36) von einem Gehäuseaustritt (55) aus dem Versorgungsraum (5) zu einer Motoreinheit (23) verläuft und zwischen dem Gehäuseaustritt (55) und der Motoreinheit (23) eine variable Abstandsausgleichsschlaufe (57) aufweist.

5. Säulenbohrmaschine nach wenigstens einem der vorhergehenden Ansprüche,
**dadurch gekennzeichnet,**
**dass** in einem Innenraum (40) des Gehäuses (4) ein lösbares, den Antriebsraum (5) und den Versorgungsraum (6) voneinander abteilendes Trennelement (39) vorgesehen ist.

6. Säulenbohrmaschine nach Anspruch 5,
**dadurch gekennzeichnet,**
**dass** das Trennelement (39) plattenartig ausgebildet ist.

7. Säulenbohrmaschine nach Anspruch 5 oder 6,
**dadurch gekennzeichnet,**
**dass** das Trennelement (39) eine Bohrspindel (9) wenigstens abschnittsweise umgreifend ausgebildet ist.

8. Säulenbohrmaschine nach wenigstens einem der Ansprüche 5 bis 7,
**dadurch gekennzeichnet,**
**dass** das Trennelement (39) einen inneren Boden (43) des Gehäuses (4) fluchtend fortsetzend ausgebildet ist.
